# FASCICULE DE BREVET EUROPEEN

(11) **EP 3 008 987 B1**
(45) Date de publication et mention de la délivrance du brevet: **12.07.2017**
(21) Numéro de dépôt: 15189519.0
(22) Date de dépôt: 13.10.2015
(51) Int. Cl.: A01C 5/06

(54) **ELÉMENT SEMEUR AVEC ROULETTE DE PLOMBAGE ET DISQUES DE FERMETURE ET SEMOIR ÉQUIPÉ D'UN TEL ÉLÉMENT SEMEUR**
SÄEINHEIT MIT EINDRUCKROLLE UND ZUSTREICHERSCHEIBEN UND SÄMASCHINE MIT SOLCHEN SÄEINHEIT
SEEDING UNIT WITH A TAMPING WHEEL AND CLOSING DISCS AND SEED DRILL EQUIPPED WITH SUCH A SEEDING UNIT

(30) Priorité: 14.10.2014 FR 1459831
(43) Date de publication de la demande: 20.04.2016
(73) Titulaire: KUHN S.A., 67700 Saverne (FR)
(72) Inventeur: DAILLY, Aurélien, 67700 Saverne (FR); AUDIGIE, Jean-Charles, 67330 Bouxwiller (FR)
(74) Mandataire: Esch, Esther Evelyne

(56) Documents cités:
- US-A- 5 595 130
- US-A1- 2002 174 813

## Description

La présente invention se rapporte au domaine technique général du machinisme agricole. L'invention concerne un élément semeur comportant un support sur lequel sont montés un système d'enterrage, un dispositif de contrôle de profondeur, une roulette de plombage, des disques de fermeture et un dispositif de rappuyage, la roulette de plombage et les disques de fermeture s'étendant entre le système d'enterrage et le dispositif de rappuyage. Elle se rapporte également à un semoir présentant un châssis qui supporte au moins un élément semeur.

Des éléments semeurs connus de ce type sont montés sur le châssis d'un semoir dans le but de déposer des graines en terre sur plusieurs lignes et selon un écartement précis. Un tel élément semeur comporte un support destiné à porter un système d'enterrage composé de deux disques d'ouverture, d'un dispositif de contrôle de profondeur à roues de jauge et un dispositif de fermeture avec une roue de rappuyage. Pour certaines conditions, l'élément semeur est équipé d'une roulette de plombage et de disques de fermeture disposés entre le système d'enterrage et le dispositif de rappuyage. L'utilisation de la roulette de plombage est recommandée en conditions sèches pour placer la graine dans un environnement humide. Dans des conditions difficiles avec peu de terre fine disponible, l'utilisation de disques de fermeture permet de recouvrir les graines puisqu'ils ramènent de la terre fine sur la ligne de semis avant la fermeture du sillon. En conditions collantes, il est conseillé d'escamoter ces équipements. Ainsi, chaque équipement est monté de manière articulée par rapport au support de l'élément semeur.

La roulette de plombage est solidaire d'une interface qui est fixée à l'arrière du support de l'élément semeur. La roulette de plombage est liée à l'interface via un pivot horizontal. Ce pivot horizontal permet à la roulette de plombage, d'une part de suivre les ondulations du terrain et d'autre part de s'escamoter en position haute lorsqu'elle n'est pas utilisée. Les disques de fermeture sont, quant à eux, montés sur une platine via une articulation horizontale. La platine est fixée derrière l'interface supportant la roulette de plombage. Les disques de fermeture sont réglables en hauteur et en pression. Lorsqu'un élément semeur est équipé d'une roulette de plombage et de disques de fermeture, la fermeture du sillon se fait plus tard puisque le dispositif de rappuyage a reculé par rapport au système d'enterrage. La distance entre le point de chute des graines et le dispositif de rappuyage a donc augmenté. Le recouvrement du sillon n'est donc pas toujours assuré, ce qui signifie des pertes pour l'agriculteur puisque les graines restées à l'air libre ne germent pas et une fermeture irrégulière engendre une levée des graines non homogène. Ces phénomènes sont encore accentués lors de semis en courbe ou lors de semis en dévers.

Le document US 5 595 130 divulgue un élément semeur comportant un support 38 sur lequel sont montés un système d'enterrage 238, un dispositif de contrôle de profondeur 52, un dispositif de rappuyage 58 et une roulette de plombage 56.

Le document US 2002/174813 divulgue un élément semeur 11 ou 13 comportant un support 26 sur lequel sont montés un système d'enterrage 24, un dispositif de contrôle de profondeur 28, un dispositif de rappuyage 36 et une roulette de plombage 32.

L'objet de la présente invention vise donc à s'affranchir des inconvénients rencontrés dans l'état de la technique. Elle doit notamment proposer un élément semeur dont le recouvrement du sillon est amélioré, même dans des conditions d'utilisation difficiles.

A cet effet, une importante caractéristique de l'invention consiste en ce que la roulette de plombage et les disques de fermeture sont fixés sur une articulation commune d'axe horizontal. Grâce à cette caractéristique, le rappui et la fermeture du sillon sont améliorés puisque la distance entre le point de chute des graines et le dispositif de rappuyage est réduite. Avec un élément semeur plus court, le recouvrement du sillon est assuré même dans les semis en courbe. D'une manière avantageuse, le nombre de pièces constitutives de l'élément semeur est réduit.

D'autres caractéristiques et avantages de l'invention se dégageront de la description qui va suivre en regard des dessins annexés qui ne sont donnés qu'à titre d'exemples non limitatifs de l'invention. Sur ces dessins :
- la **figure 1** représente une vue de côté d'un élément semeur conforme à l'invention,
- la **figure 2** représente une vue de détail de l'élément semeur de la figure 1,
- la **figure 3** représente une vue en coupe suivant le plan III défini sur la figure 2,
- la **figure 4** représente une vue de côté d'un semoir attelé à un tracteur dans une position de travail avec un élément semeur selon la figure 1,
- la **figure 5** représente une vue de dessus du semoir de la figure 4.

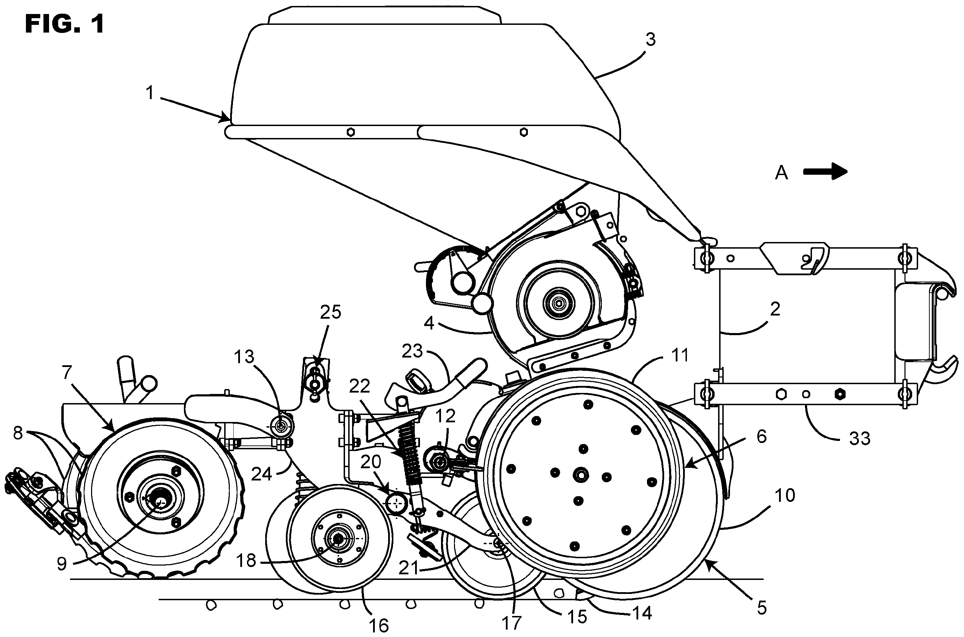

La figure 1 montre un élément semeur (1) conforme à l'invention. Durant le travail, l'élément semeur (1) est déplacé dans un champ dans le sens de la flèche (A). Dans la suite de la description, les notions suivantes "avant", "arrière" et "devant", "derrière" sont définies par rapport à la direction d'avance (A). Un tel élément semeur (1) possède notamment un support (2) sur lequel sont montés une trémie (3), une distribution (4), un système d'enterrage (5), un dispositif de contrôle de profondeur (6) et un dispositif de rappuyage (7). La trémie (3) constitue la réserve de graines destinée à alimenter la distribution (4). Cette dernière permet d'extraire une à une les graines de la trémie (3) et de les répartir à intervalle constant sur la ligne de semis. La distribution des graines est réalisée de manière mécanique ou assistée par un dispositif pneumatique. Dans l'exemple de réalisation représenté, la distribution (4) comporte un disque vertical et la sélection de la graine est assistée par un flux d'air en dépression. A la sortie de la distribution (4), les graines sont transportées vers le système d'enterrage (5) pour être mise en terre via une goulotte. Le système d'enterrage (5) crée un sillon à une profondeur déterminée pour y placer la graine. La profondeur de semis est donnée par le dispositif de contrôle de profondeur (6). Le dispositif de contrôle de profondeur (6) est disposé latéralement, au niveau de la chute des graines, pour permettre au système d'enterrage (5) de suivre les dénivellations du sol sans décalage. Le dispositif de rappuyage (7) s'étend derrière le dispositif de contrôle de profondeur (6), compte tenu de la direction d'avance (A). Le dispositif de rappuyage (7) doit assurer la fermeture du sillon dans diverses conditions d'utilisation, liées à la nature ou à l'humidité du sol, tout en conservant une fiabilité et une tenue dans le temps acceptables. Pour cela, le dispositif de rappuyage (7) comporte au moins une roue de rappuyage (8) qui tasse le sillon en pivotant autour d'un axe de rotation (9).

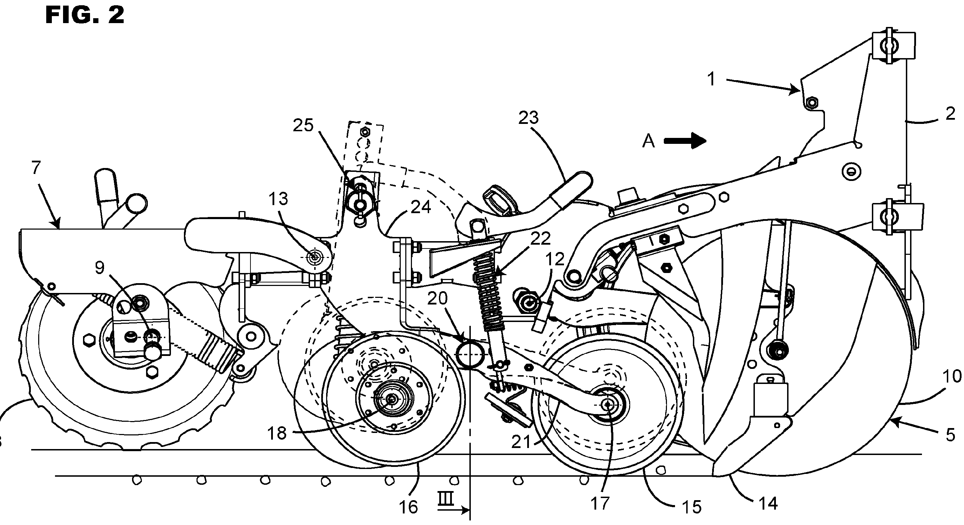

La figure 2 illustre plus en détail le système d'enterrage (5), le dispositif de contrôle de profondeur (6) et le dispositif de rappuyage (7). Le système d'enterrage (5) est composé de deux disques d'ouverture (10). Un soc (14) est placé entre les disques d'ouverture (10) pour parfaire le placement des graines sur la ligne de semis. Ce soc (14) permet de maintenir le sillon ouvert pour y placer les graines. Le dispositif de contrôle de profondeur (6) est réalisé par au moins une roue de jauge (11). Le dispositif de contrôle de profondeur (6) est fixé sur un support (2) au moyen d'une première articulation (12) d'axe horizontal et sensiblement perpendiculaire à la direction d'avance (A). L'axe de la première articulation (12) s'étend derrière le dispositif de contrôle de profondeur (6). Le dispositif de rappuyage (7) est fixé sur le support (2) au moyen d'une deuxième articulation (13), d'axe horizontal et sensiblement perpendiculaire à la direction d'avance (A). L'axe de la première articulation (12) est sensiblement parallèle à l'axe de la deuxième articulation (13). D'une manière avantageuse, une roue de jauge (11) est associée à chacun des disques d'ouverture (10). La roue de jauge (11) est placée latéralement sur le disque d'ouverture (10). De préférence, la position latérale de la roue de jauge (11) est telle que son point de contact avec le sol est aligné, en vue de côté, avec l'endroit où la graine va tomber au sol. Ainsi, les disques d'ouverture (10) peuvent suivre, sans décalage, toutes les dénivellations du sol et garantir une profondeur de semis régulière. Seule une des roues de jauge (11) et une des roues de rappuyage (8) ont été représentées sur la figure 2.

Pour certaines conditions, l'élément semeur (1) est équipé d'une roulette de plombage (15) et de disques de fermeture (16) disposés entre le système d'enterrage (5) et le dispositif de rappuyage (7). Dans des conditions normales ou sèches, il est recommandé d'utiliser une roulette de plombage (15) pour rappuyer la graine dans la terre fraîche et assurer une bonne germination. La roulette de plombage (15) est prévue derrière le système d'enterrage (5), elle est positionnée directement après le soc (14). La graine dispose ainsi des conditions idéales pour germer puisqu'elle est en contact avec la terre humide. La roulette de plombage (15) pivote autour de son axe de rotation (17) et rappuie donc la graine dans la terre avant la fermeture du sillon. Les disques de fermeture (16) permettent de recouvrir les graines dans des conditions difficiles lorsque peu de terre fine est disponible et lorsque le bord du sillon est dur. Ils pivotent autour d'un axe (18) sensiblement horizontal. Un disque de fermeture (16) travaille de chaque côté du sillon et ramène de la terre sur la ligne de semis avant le passage du dispositif de rappuyage (7) qui ferme le sillon. Le dispositif de rappuyage (7) et les disques de fermeture (16) sont des éléments distincts. Les disques de fermeture (16) sont concaves. Ils sont généralement montés de manière décalée par rapport à la direction d'avance (A). Dans une alternative, les axes (18) des disques de fermeture (16) sont alignés l'un avec l'autre. Pour déposer les graines dans le sillon, réalisé dans le plan vertical médian (19) de chaque élément semeur (1), les disques d'ouverture (10) s'étendent donc de part et d'autre du plan vertical médian (19). La roulette de plombage (15), qui agit directement sur les graines déposées dans le sillon, est placée dans le plan vertical médian (19). Les disques de fermeture (16), qui aident à la fermeture du sillon, s'étendent de part et d'autre du plan vertical médian (19). Puis, les roues de rappuyage (8) interviennent de chaque côté du sillon pour fermer et tasser le sillon. Pour ne pas détériorer le placement précis des graines dans le sillon, en conditions collantes, il est d'usage d'escamoter la roue de plombage (15) et les disques de fermeture (16). La roue de plombage (15) et les disques de fermeture (16) sont ainsi montés mobile en rotation par rapport au support (2) de l'élément semeur (1). Ils peuvent passer d'une position active à une position inactive en fonction des conditions de travail. La roue de plombage (15) et les disques de fermeture (16) sont des équipements intermédiaires disposés entre le dispositif de contrôle de la profondeur (6) et le dispositif de rappuyage (7).

Selon une importante caractéristique de l'invention, la roue de plombage (15) et les disques de fermeture (16) sont fixés sur une articulation commune (20) d'axe horizontal. Grâce à cette caractéristique, le dispositif de rappuyage (7) est plus proche du système d'enterrage (5) et le recouvrement du sillon est assuré même dans les semis en courbe. Comme la distance entre le soc (14) et le dispositif de rappuyage (7) est réduite, l'encombrement en longueur de l'élément semeur (1) selon l'invention a diminué. Avec une distance minimum entre le système d'enterrage (5) et le dispositif de rappuyage (7), on obtient un rappui du sillon efficace même lorsque l'élément semeur (1) est utilisé sur un terrain en dévers ou pour un semis en courbe. D'autre part, le nombre de pièces constituant l'élément semeur (1) est aussi réduit puisque l'articulation (20) est commune pour la roulette de plombage (15) et les disques de fermeture (16).

De préférence, l'articulation commune (20) est positionnée après la création du sillon par le système d'enterrage (5). Selon la figure 1, l'articulation commune (20) est positionnée, compte tenu de la direction d'avance (A), entre la roulette de plombage (15) et les disques de fermeture (16). L'articulation commune (20) s'étend en dessous et à l'arrière de la première articulation (12). L'axe de l'articulation commune (20) est sensiblement parallèle à l'axe de la première articulation (12). D'une manière avantageuse, l'articulation commune (20) est solidaire du support (2) de l'élément semeur (1). La roulette de plombage (15) est liée à l'articulation commune (20) au moyen d'une aile (21). Elle est maintenue dans le fond du sillon lors de son utilisation par un système à ressort (22). Le système à ressort (22) est fixé entre le support (2) et l'aile (21) de la roulette de plombage (15). Le système à ressort (22) est par exemple une tringle sur laquelle est monté un ressort. La tringle comporte plusieurs positions de fixation du ressort permettant d'augmenter ou de réduire la pression d'appui de la roulette de plombage (15) sur le sol. Pour une meilleure pression de la roue de plombage (15) dans le fond du sillon, un tel système à ressort (22) est placé de part et d'autre de la roulette de plombage (15). L'articulation commune (20) permet également à la roulette de plombage (15) de suivre le fond de sillon. La roulette de plombage (15) est poussée puisque l'articulation commune (20) est placée derrière son axe de rotation (17). Le système à ressort (22) présente également un levier à came pour permettre l'escamotage de la roulette de plombage (15) lorsqu'elle ne peut pas être utilisée. La position escamotée de la roulette de plombage (15) est représentée en traits interrompus sur la figure 2.

Dans l'exemple de réalisation des figures, les disques de fermeture (16) sont montés sur le support (2) au moyen d'une platine (24) et le dispositif de rappuyage (7) est fixé à l'arrière de la platine (24). La platine (24) porte la deuxième articulation (13). Les disques de fermeture (16) sont mobiles par rapport à la platine (24) pour suivre les ondulations du terrain. Ils disposent également d'un système de réglage de la pression au sol (25). La profondeur de travail des disques de fermeture (16) est également réglable pour s'adapter aux conditions du terrain. Les disques de fermeture (16) sont liés à l'articulation commune (20) au moyen d'un bras (26). Selon la figure 2, et d'une manière particulièrement avantageuse, l'articulation commune (20) est ménagée sur la platine (24). L'articulation commune (20) s'étend à l'avant de l'axe (18), ainsi les disques de fermeture (16) sont tirés lors du travail. La platine (24) dispose d'une position dans laquelle les disques de fermeture (16) sont escamotés. Dans cette position, ils sont inactifs. Cette position des disques de fermeture (16) est représentée en traits interrompus sur la figure 2. L'articulation commune (20) est localisée plus près de l'axe (18) d'au moins un des disques de fermeture (16) que de l'axe de rotation (17) de la roulette de plombage (15). L'articulation commune (20) s'étend avantageusement en dessous d'une droite passant par l'axe de rotation (9) de la roue de rappuyage (8) la plus avancée et par l'axe pivot de la roue de jauge (11) au travail.

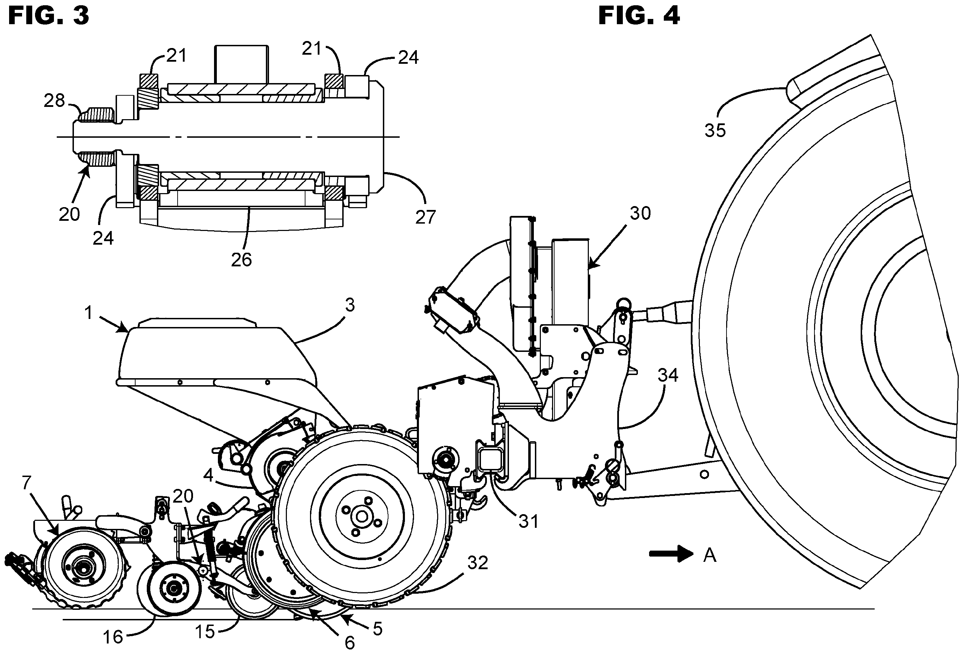

La figure 3 illustre en coupe l'articulation commune (20). L'articulation commune (20) est réalisée par un axe épaulé (27) pourvu à son autre extrémité d'un filetage destiné à recevoir un écrou (28). L'axe épaulé (27) est monté sur la platine (24) et supporte les deux ailes (21) de la roulette de plombage (15) et le bras (26) des disques de fermeture (16). A la lumière de la figure 3, on voit que les deux ailes (21) sont situées de part et d'autre du bras (26) et que chaque aile (21) est montée sur une bague épaulée. L'axe épaulé (27) dispose de plusieurs diamètres de montage. Le bras (26) est également monté sur l'axe épaulé (27) via des bagues.

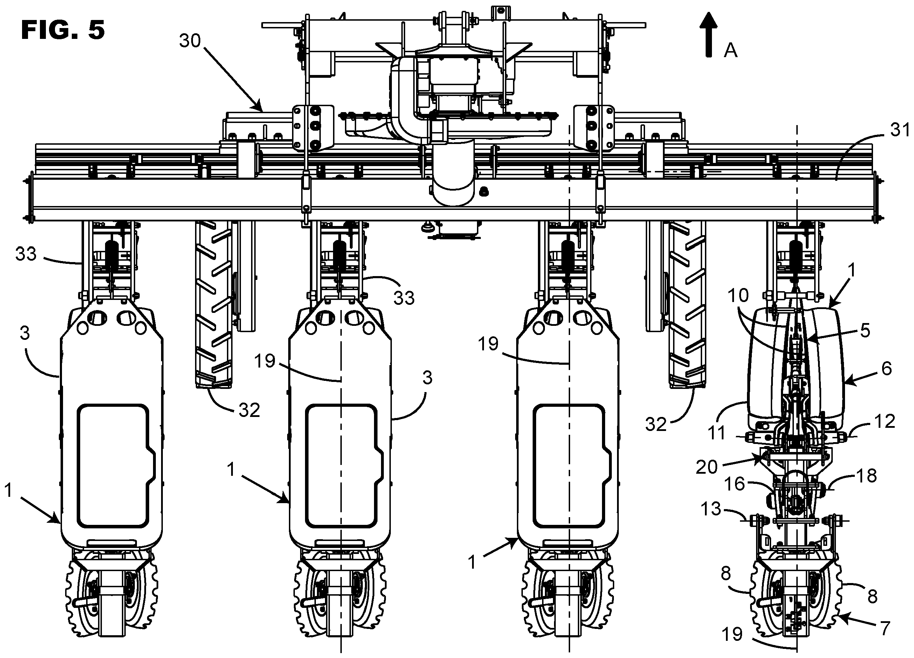

La machine agricole représentée sur la figure 4 est un semoir (30) de précision ou monograine. Un tel semoir (30) distribue les graines une à une sur la ligne de semis à des écartements constants. Ce semoir (30) comporte un châssis (31) qui supporte au moins un élément semeur (1) et qui repose sur le sol, au travail, via des roues (32). Le nombre d'éléments semeurs (1) correspond au nombre de rangs de semis. La figure 5 illustre le semoir (30) en vue de dessus avec quatre éléments semeurs (1) répartis de manière régulière sur le châssis (31). Chaque élément semeur (1) est monté sur le châssis (31) au moyen d'un parallélogramme (33) déformable qui lui permet de se déplacer parallèlement au sol. Dans certains cas, l'écartement entre les éléments semeurs (1) voisins est irrégulier.

Le semoir (30) représenté sur la figure 4 est dans une configuration de travail. Le châssis (31) comporte un cadre d'attelage (34) permettant d'établir une liaison au dispositif d'attelage d'un tracteur (35). Le tracteur (35) déplace le semoir (30) suivant la direction indiquée par la flèche (A). Afin de garantir un écartement constant entre les graines semées, la vitesse de rotation de la distribution (4) est proportionnelle à la vitesse d'avance du semoir (30). L'entraînement de la distribution (4) est effectué via une boîte de vitesses, une chaîne et des pignons ou via un engrenage conique, via un moteur électrique ou hydraulique.

Sur la figure 5, le système d'enterrage (5) avec ses deux disques d'ouverture (10) est représenté sur l'un des éléments semeurs (1). Chaque disque d'ouverture (10) est orienté par rapport à la verticale pour définir un angle d'attaque. Cet angle d'attaque permet au disque d'ouverture (10) de découper le sol en le soulevant d'un côté. Chaque disque d'ouverture (10) tourne autour d'un pivot d'axe sensiblement horizontal. Le pivot est avantageusement incliné par rapport à l'horizontale pour pouvoir déposer les graines au fond du sillon. Ainsi, le disque d'ouverture (10) réalise l'ouverture et la dépose des graines dans le sillon.

Il est bien évident que l'invention n'est pas limitée au mode de réalisation décrit ci-dessus et représenté sur les dessins annexés. Des modifications restent possibles, notamment en ce qui concerne la constitution ou le nombre des divers éléments ou par substitution d'équivalents techniques, sans pour autant sortir du domaine de protection tel qu'il est défini dans les revendications.

## Revendications

1. Élément semeur (1) comportant un support (2) sur lequel sont montés un système d'enterrage (5), un dispositif de contrôle de profondeur (6), un dispositif de rappuyage (7), une roulette de plombage (15) et des disques de fermeture (16), la roulette de plombage (15) et les disques de fermeture (16) s'étendant entre le système d'enterrage (5) et le dispositif de rappuyage (7), ***caractérisé en ce que*** la roulette de plombage (15) et les disques de fermeture (16) sont fixés sur une articulation commune (20) d'axe horizontal.

2. Élément semeur selon la revendication 1, ***caractérisé en ce que*** l'articulation commune (20) est solidaire du support (2) de l'élément semeur (1).

3. Élément semeur selon la revendication 1 ou 2, ***caractérisé en ce que*** l'articulation commune (20) est positionnée après la création du sillon.

4. Élément semeur selon l'une quelconque des revendications 1 à 3, ***caractérisé en ce que*** l'articulation commune (20) s'étend perpendiculairement au plan vertical médian (19) de l'élément semeur (1).

5. Élément semeur selon l'une quelconque des revendications 1 à 4, ***caractérisé en ce que*** l'articulation commune (20) est centrée sur le plan vertical médian (19) de l'élément semeur (1).

6. Élément semeur selon l'une quelconque des revendications 1 à 5, ***caractérisé en ce que*** l'articulation commune (20) est positionnée, compte tenu de la direction d'avance (A), entre la roulette de plombage (15) et les disques de fermeture (16).

7. Élément semeur selon la revendication 6, ***caractérisé en ce que*** l'articulation commune (20) est localisée plus près de l'axe (18) d'au moins un des disques de fermeture (16) que de l'axe de rotation (17) de la roulette de plombage (15).

8. Élément semeur selon l'une quelconque des revendications 1 à 7, ***caractérisé en ce que*** les disques de fermeture (16) sont fixés sur une platine (24) solidaire du support (2) et **en ce que** la platine (24) porte l'articulation commune (20).

9. Élément semeur selon l'une quelconque des revendications 1 à 8, ***caractérisé en ce que*** la roulette de plombage (15) s'étend dans le plan vertical médian de l'élément semeur (1).

10. Élément semeur selon l'une quelconque des revendications 1 à 9, ***caractérisé en ce que*** le dispositif de rappuyage (7) et les disques de fermeture (16) sont des éléments distincts.

11. Élément semeur selon l'une quelconque des revendications 1 à 10, ***caractérisé en ce que*** la roulette de plombage (15) est maintenue dans le fond du sillon par un système à ressort (22).

12. Élément semeur selon la revendication 11, ***caractérisé en ce qu***'un système à ressort (22) est placé de part et d'autre de la roulette de plombage (15).

13. Élément semeur selon la revendication 11 ou 12, ***caractérisé en ce que*** le système à ressort (22) présente un levier à came.

14. Élément semeur selon l'une quelconque des revendications 1 à 13, ***caractérisé en ce que*** l'articulation commune (20) est réalisée par un axe épaulé (27) pourvu à son autre extrémité d'un filetage.

15. Semoir (30) comportant un châssis (31) sur lequel est réparti au moins un élément semeur (1) tel que défini selon l'une des revendications 1 à 14.

## Patentansprüche

1. Säelement (1) mit einer Halterung (2), auf der ein Tiefenführungssystem (5), eine Arbeitstiefensteuervorrichtung (6), eine Rückverfestigungsvorrichtung (7), eine Andruckrolle (15) und Zustreicherscheiben (16) angebracht sind, wobei sich die Andruckrolle (15) und die Zustreicherscheiben (16) zwischen dem Tiefenführungssystem (5) und der Rückverfestigungsvorrichtung (7) erstrecken, ***dadurch gekennzeichnet,* dass** die Andruckrolle (15) und die Zustreicherscheiben (16) auf einem gemeinsamen Gelenk (20) mit horizontaler Achse befestigt sind.

2. Säelement nach Anspruch 1, ***dadurch gekennzeichnet,* dass** das gemeinsame Gelenk (20) fest mit der Halterung (2) des Säelements (1) verbunden ist.

3. Säelement nach Anspruch 1 oder 2, ***dadurch gekennzeichnet,* dass** das gemeinsame Gelenk (20) nach der Furchenherstellung angeordnet ist.

4. Säelement nach irgendeinem der Ansprüche 1 bis 3, ***dadurch gekennzeichnet,* dass** sich das gemeinsame Gelenk (20) senkrecht zur vertikalen Mittelebene (19) des Säelements (1) erstreckt.

5. Säelement nach irgendeinem der Ansprüche 1 bis 4, ***dadurch gekennzeichnet,* dass** das gemeinsame Gelenk (20) auf der vertikalen Mittelebene (19) des Säelements (1) zentriert ist.

6. Säelement nach irgendeinem der Ansprüche 1 bis 5, ***dadurch gekennzeichnet,* dass** das gemeinsame Gelenk (20), unter Berücksichtigung der Vorschubrichtung (A), zwischen der Andruckrolle (15) und den Zustreicherscheiben (16) angeordnet ist.

7. Säelement nach Anspruch 6, ***dadurch gekennzeichnet,* dass** sich das gemeinsame Gelenk (20) näher an der Achse (18) von mindestens einer der Zustreicherscheiben (16) als an der Rotationsachse (17) der Andruckrolle (15) befindet.

8. Säelement nach irgendeinem der Ansprüche 1 bis 7, ***dadurch gekennzeichnet,* dass** die Zustreicherscheiben (16) auf einer Platte (24) befestigt sind, die fest mit der Halterung (2) verbunden ist, und dadurch, dass die Platte (24) das gemeinsame Gelenk (20) trägt.

9. Säelement nach irgendeinem der Ansprüche 1 bis 8, ***dadurch gekennzeichnet,* dass** sich die Andruckrolle (15) in der vertikalen Mittelebene des Säelements (1) erstreckt.

10. Säelement nach irgendeinem der Ansprüche 1 bis 9, ***dadurch gekennzeichnet,* dass** die Rückverfestigungsvorrichtung (7) und die Zustreicherscheiben (16) unterschiedliche Elemente sind.

11. Säelement nach irgendeinem der Ansprüche 1 bis 10, ***dadurch gekennzeichnet,* dass** die Andruckrolle (15) von einem Federsystem (22) am Furchenboden gehalten wird.

12. Säelement nach Anspruch 11, ***dadurch gekennzeichnet,* dass** ein Federsystem (22) beidseits der Andruckrolle (15) angeordnet ist.

13. Säelement nach Anspruch 11 oder 12, ***dadurch gekennzeichnet,* dass** das Federsystem (22) einen Nockenhebel aufweist.

14. Säelement nach irgendeinem der Ansprüche 1 bis 13, ***dadurch gekennzeichnet,* dass** das gemeinsame Gelenk (20) durch eine Schulterspindel (27) ausgeführt wird, die an ihrem anderen Ende mit einem Gewinde versehen ist.

15. Sämaschine (30) mit einem Rahmen (31), auf dem mindestens ein Säelement (1) nach einem der Ansprüche 1 bis 14 verteilt ist.

## Claims

1. Seeder element (1) including a support (2) on which are mounted a seed burying system (5), a depth control device (6), a tamping device (7), a pressure roller (15) and closing discs (16), the pressure roller (15) and the closing discs (16) extending between the seed burying system (5) and the tamping device (7), ***characterised in* that** the pressure roller (15) and the closing discs (16) are attached to a common articulation (20) with a horizontal axis.

2. Seeder element according to claim 1, ***characterised in* that** the common articulation (20) is rigidly fastened to the support (2) of the seeder element (1).

3. Seeder element according to claim 1 or 2, ***characterised in* that** the common articulation (20) is positioned after the creation of the furrow.

4. Seeder element according to any one of the claims 1 to 3, ***characterised in* that** the common articulation (20) extends perpendicular to the vertical midplane (19) of the seeder element (1).

5. Seeder element according to any one of the claims 1 to 4, ***characterised in* that** the common articulation (20) is centred on the vertical midplane (19) of the seeder element (1).

6. Seeder element according to any of the claims 1 to 5, ***characterised in* that** the common articulation (20) is positioned, given the direction of advance (A), between the pressure roller (15) and the closing discs (16).

7. Seeder element according to claim 6, ***characterised in* that** the common articulation (20) is located closer to the axis (18) of at least one of the closing discs (16) than to the rotation axis (17) of the pressure roller (15).

8. Seeder element according to any one of the claims 1 to 7, ***characterised in* that** the closing discs (16) are attached to a plate (24) secured to the support (2) and that the plate (24) carries the common articulation (20).

9. Seeder element according to any one of the claims 1 to 8, ***characterised in* that** the pressure roller (15) extends in the vertical midplane of the seeder element (1).

10. Seeder element according to any one of the claims 1 to 9, ***characterised in* that** the tamping device (7) and the closing discs (16) are separate elements.

11. Seeder element according to any one of the claims 1 to 10, ***characterised in* that** the pressure roller (15) is kept at the bottom of the furrow by a spring system (22).

12. Seeder element according to claim 11, ***characterised in* that** a spring system (22) is placed on either side of the pressure roller (15).

13. Seeder element according to claim 11 or 12, ***characterised in* that** the spring system (22) has a cam lever.

14. Seeder element according to any one of the claims 1 to 13, ***characterised in* that** the common articulation (20) is comprised of a shoulder axle (27) with a thread at its other end.

15. Seed drill (30) including a chassis (31) on which is positioned at least one seeder element (1) as defined according to any one of the claims 1 to 14.
